# EUROPÄISCHE PATENTSCHRIFT

(11) **EP 1 827 895 B1**
(45) Veröffentlichungstag und Bekanntmachung des Hinweises auf die Patenterteilung: **03.11.2010**
(21) Anmeldenummer: 05804976.8
(22) Anmeldetag: 14.12.2005
(51) Int. Cl.: B60N 2/225

(54) **BESCHLAG FÜR EINEN FAHRZEUGSITZ**
FITTING FOR THE SEAT OF A VEHICLE
FERRURE DESTINEE A UN SIEGE DE VEHICULE

(30) Priorität: 23.12.2004 DE 102004062049
(43) Veröffentlichungstag der Anmeldung: 05.09.2007
(73) Patentinhaber: KEIPER GmbH & Co. KG, 67657 Kaiserslautern (DE)
(72) Erfinder: VOSS, Heinz, 51375 Leverkusen (DE); EWALD, Tobias, 45257 Essen (DE); LEHMANN, Ulrich, 53347 Alfter (DE); KOMAINDA, Artur, 42855 Remscheid (DE); MESSERSCHMIDT, Rainer, 40211 Düsseldorf (DE); SCHOLZ, Grit, 42853 Remscheid (DE); NORBISRATH, Andreas, 42279 Wuppertal (DE); STEMMER, Jürgen, 42897 Remscheid (DE)
(74) Vertreter: Patentanwälte Hosenthien-Held und Dr. Held
(86) Internationale Anmeldenummer: PCT/EP2005/013428
(87) Internationale Veröffentlichungsnummer: WO 2006/069630

(56) Entgegenhaltungen:
- DE-A1- 3 914 084
- DE-A1- 3 941 215
- DE-C1- 19 517 441
- DE-C1- 19 548 809

## Beschreibung

Die Erfindung betrifft einen Beschlag für einen Fahrzeugsitz mit den Merkmalen des Oberbegriffs des Anspruches 1.

Aus der DE 39 41 215 A1 ist ein Beschlag dieser Art bekannt, mit welchem die Lehne eines Fahrzeugsitzes neigungseinstellbar an dessen Sitzteil angebracht ist. Bei diesem Beschlag sitzen auf einem Kragenzug des ersten Beschlagteils ein durch zwei Keilsegmente definierter Sperrexzenter und ein durch ein sichelförmiges Zentriersegment definierter Laufexzenter. Der Sperrexzenter dient dem Sperren des Beschlags, wogegen der Laufexzenter während der Einstellbewegung die Lagerung und den Antrieb der Beschlagteile alleine übernimmt. Durch die Materialwahl und Form der Bauteile kann während der Einstellbewegung lokal eine erhöhte Reibung auftreten, was die notwendigen Bedienkräfte erhöht. Dies macht sich bei einer Einstellbewegung entgegen der Lastrichtung, d.h. entgegen der Richtung einer vom Benutzer auf die Lehne ausgeübten Kraft oder ansonsten entgegen der Richtung der Gewichtskraft der Lehne, stärker bemerkbar als in Lastrichtung.

Der Erfindung liegt die Aufgabe zu Grunde, einen Beschlag der eingangs genannten Art zu verbessern, insbesondere die Bedienkräfte entgegen der Lastrichtung zu verringern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem der sich drehende Mitnehmer den drehbaren Laufexzenter querkraftfrei (bezüglich einer gemeinsamen Drehachse) beaufschlagt, setzt das antreibende Drehmoment des Mitnehmers koaxial am Laufexzenter an, so daß eine Bewegung mit gleichbleibenden Reibungsbedingungen erfolgen kann. Eine durch Querkräfte ausgelöste, der Drehung überlagerte Kippbewegung um einen Momentanpol, welche zu einer lokalen Erhöhung der Reibung und damit zu erhöhten Bedienkräften führen würde, wird vermieden. Die beanspruchte Querkraftfreiheit soll daher so zu verstehen sein, daß minimale Querkräfte, die beispielsweise durch Bauteiltoleranzen bedingt sind, erlaubt sind, solange sie die Reibung nicht wesentlich ändern.

Das querkraftfreie Beaufschlagen wird beispielsweise dadurch erreicht, daß die Kontaktstellen zwischen dem Mitnehmer und dem Laufexzenter gleichmäßig über den Umfang verteilt sind und den gleichen Abstand zur gemeinsamen Drehachse des Mitnehmers und des Laufexzenters aufweisen. Bei einer Ausführung mit Schlitz-Zapfen-Führungen, welche den Vorteil eines Leerwegs zur Festlegung der zeitlichen Abfolge des Ansteuerns von Sperrexzenter und Laufexzenter bietet, sind beispielsweise zwei Zapfen und zwei Langlöcher punktsymmetrisch zueinander bezüglich der Drehachse des Mitnehmers und des Laufexzenters angeordnet, wobei die Zuordnung von Zapfen und Langlöchern zum Mitnehmer einerseits und zum Laufexzenter andererseits beliebig ist. Es ist aber auch möglich, eine drehfeste Verbindung zwischen dem Mitnehmer und dem Laufexzenter vorzusehen, beispielsweise indem die - vorzugsweise durch Zapfen und Löcher definierten - Kontaktstellen spielfrei ausgebildet sind. Die drehfeste Verbindung kann dahin weitergebildet sein, daß der Mitnehmer und der Laufexzenter ein einziges Bauteil bilden, d.h. der Mitnehmer als Laufexzenter ausgebildet ist.

Indem der Laufexzenter sowohl gegenüber dem ersten Beschlagteil als auch gegenüber dem zweiten Beschlagteil mittels je einer Wälz- oder Gleitlagerbuchse gelagert ist, kann eine geringe Reibung zwischen dem Laufexzenter und den Wälz- oder Gleitlagerbuchsen (oder zwischen einer Wälz- oder Gleitlagerbuchse und dem zugeordneten Beschlagteil) gewählt werden, welche kleiner ist als die zum Sperren des Beschlags erforderliche Reibung zwischen dem Sperrexzenter und wenigstens einem der Beschlagteile. Dies reduziert die Bedienkräfte. Der Sperrexzenter dient dem Sperren des Beschlags und der Spielfreistellung. In geometrischer Hinsicht erfolgt die Anlage des Laufexzenters an den Wälz- oder Gleitlagerbuchsen bezüglich seiner Drehachse radial außen und radial innen. Vorzugsweise kann jede der beiden Wälz- oder Gleitlagerbuchsen drehfest mit dem ihr zugeordneten Beschlagteil verbunden sein, beispielsweise in eine Öffnung oder einen Kragenzug einpresst oder auf einen Kragenzug aufgepresst. Alternativ kann eine (oder beide) der beiden Wälz- oder Gleitlagerbuchsen drehfest mit dem Laufexzenter verbunden sein, beispielsweise in oder auf den Laufexzenter gepresst sein.

Der Laufexzenter kann sichelförmig ausgebildet sein und sich in Umfangsrichtung beispielsweise über mehr als 180° erstrecken. Es ist aber auch möglich, daß der Laufexzenter ringförmig ausgebildet ist, d.h. in Umfangsrichtung vollständig geschlossen ist. Bei den Varianten mit reibungsarmer Relativbewegung zwischen der entsprechenden Wälz- oder Gleitlagerbuchse und dem zugeordneten Beschlagteil und einem sichelförmigen Laufexzenter braucht die Wälz- oder Gleitlagerbuchse nur über einen auf den Laufexzenter abgestimmten Teil des Umfangs ausgebildet sein, d.h. sie kann als sichelförmiges Wälz- oder Gleitlagersegment ausgebildet sein.

Die Funktionstrennung zwischen Sperrexzenter und Laufexzenter liegt nicht in allen Situationen exakt vor. Bei einem gesperrten Beschlag übernimmt der Sperrexzenter die Sperrfunktion, die Spielfreistellung und in der Regel auch die Lagerung der Beschlagteile aufeinander. Jedoch kann auch der Laufexzenter zur Lagerung der Beschlagteile beitragen. Bei einer Einstellbewegung entgegen der Lastrichtung übernimmt der Laufexzenter normalerweise alleine die Lagerung der Beschlagteile und den Antrieb der Abwälzbewegung. Die Lastrichtung ist die Richtung einer vom Benutzer ausgeübten Kraft auf die Sitzkomponente, welche mittels des Beschlags angebracht ist, oder ansonsten die Richtung der Gewichtskraft der Sitzkomponente. Bei einer Einstellbewegung in Lastrichtung übernimmt zwar der Laufexzenter vorrangig die Lagerung der Beschlagteile und den Antrieb der Abwälzbewegung, jedoch ist es - je nach Situation und Randbedingungen - möglich, daß der Sperrexzenter oder seine Bestandteile die Lagerung und den Antrieb unterstützen.

Die Ansteuerung des vorzugsweise aus zwei Keilsegmenten bestehenden Sperrexzenters kann mittels eines Mitnehmersegments des Mitnehmers erfolgen, so daß die Keilsegmente sich aneinander annähern und die Sperrwirkung aufheben, wobei das Maß der Annäherung in der Regel schwankt und von den lokalen Reibungsverhältnissen und Bauteiltoleranzen abhängt. Auch die Mitnahme des Laufexzenters ist mittels eines Mitnehmersegments möglich, welches bei einem ringförmigen Laufexzenter beispielsweise innerhalb einer Aussparung wirksam ist.

Die Ansteuerung kann auch so erfolgen, daß der Mitnehmer die Keilsegmente in Anlage aneinander bringt, und zwar durch Bewegen beider Keilsegmente oder durch Bewegen nur eines Keilsegments, beispielsweise des bezüglich der Lastrichtung geringer belasteten Keilsegments. Das Bewegen der Keilsegmente erfolgt vorzugsweise unter Verwendung einer Ringfeder, welche in der sperrenden Ausgangsstellung zum Auseinanderdrücken der Keilsegmente vorgesehen ist. Der Mitnehmer wirkt vorzugsweise auf einen oder beide der Endfinger der Ringfeder ein, welche in die Keilsegmente greifen, beispielsweise in Bohrungen derselben. Das Einwirken kann mittels geeignet ausgestalteter Kulissen erfolgen, die beispielsweise an einer mit dem Mitnehmer gekoppelten, schwenkbaren Kulissenschwinge vorgesehen sind. Wenn der Laufexzenter axial zwischen dem Mitnehmer und dem Sperrexzenter angeordnet ist, können den Laufexzenter durchdringende Schlitze vorgesehen sein, um den Endfingern der Ringfeder einen ungehinderten Durchgriff zu den Keilsegmenten zu erlauben.

Mit dem erfindungsgemäßen Beschlag kann beispielsweise eine Neigungseinstellung einer Lehne vorgenommen werden. Der Einsatz kann auch zur Einstellung eines anderen schwenkbaren Bereichs eines Fahrzeugsitzes erfolgen. Der erfindungsgemäße Beschlag ist vorzugsweise für einen manuellen Antrieb ausgelegt, kann jedoch auch motorisch angetrieben werden. Die Erfindung ist auch bei anderen manuell oder motorisch angetriebenen Getriebebeschlägen verwendbar.

Im folgenden ist die Erfindung anhand von drei in der Zeichnung dargestellten Ausführungsbeispielen samt mehreren Abwandlungen näher erläutert. Es zeigen
- Fig. 1: eine Explosionsdarstellung des ersten Ausführungsbeispiels,
- Fig. 2: eine schematische Darstellung eines Fahrzeugsitzes,
- Fig. 3: eine perspektivische Teilansicht des ersten Ausführungsbeispiels,
- Fig. 4: eine Teilansicht einer ersten Abwandlung des ersten Ausführungsbeispiels,

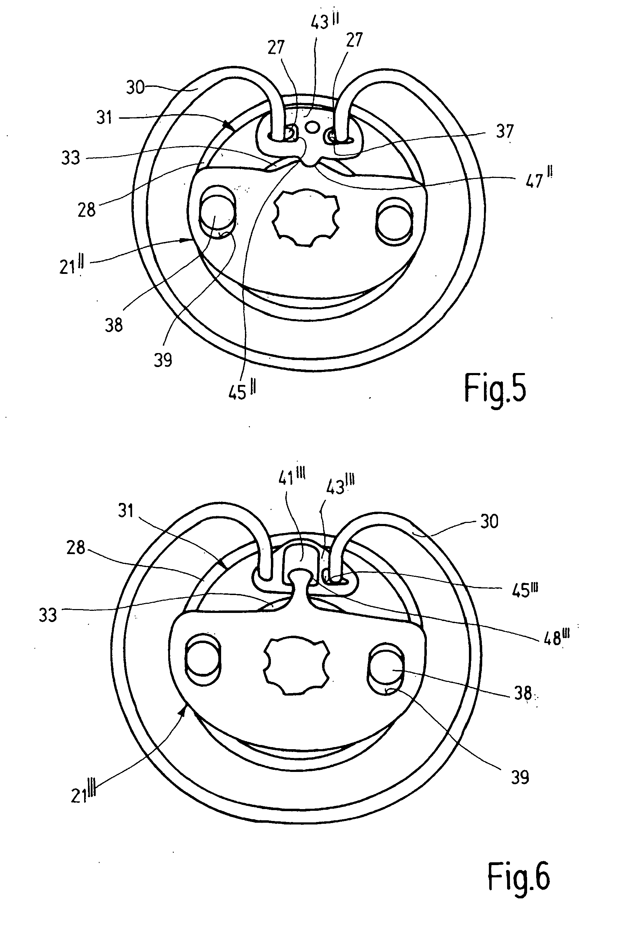

- Fig. 5: eine Teilansicht einer zweiten Abwandlung des ersten Ausführungsbeispiels,
- Fig. 6: eine Teilansicht einer dritten Abwandlung des ersten Ausführungsbeispiels,

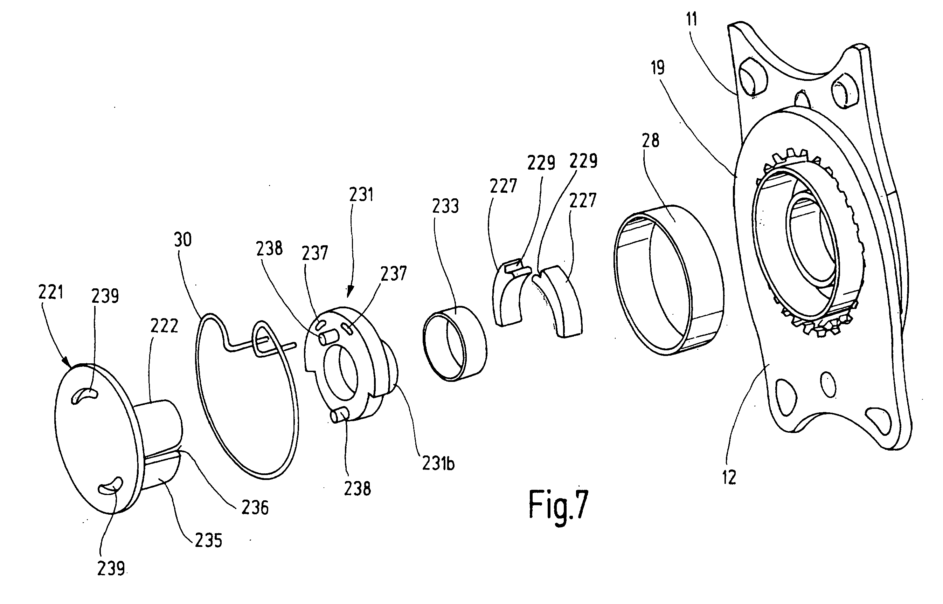

- Fig. 7: eine Explosionsdarstellung des zweiten Ausführungsbeispiels,

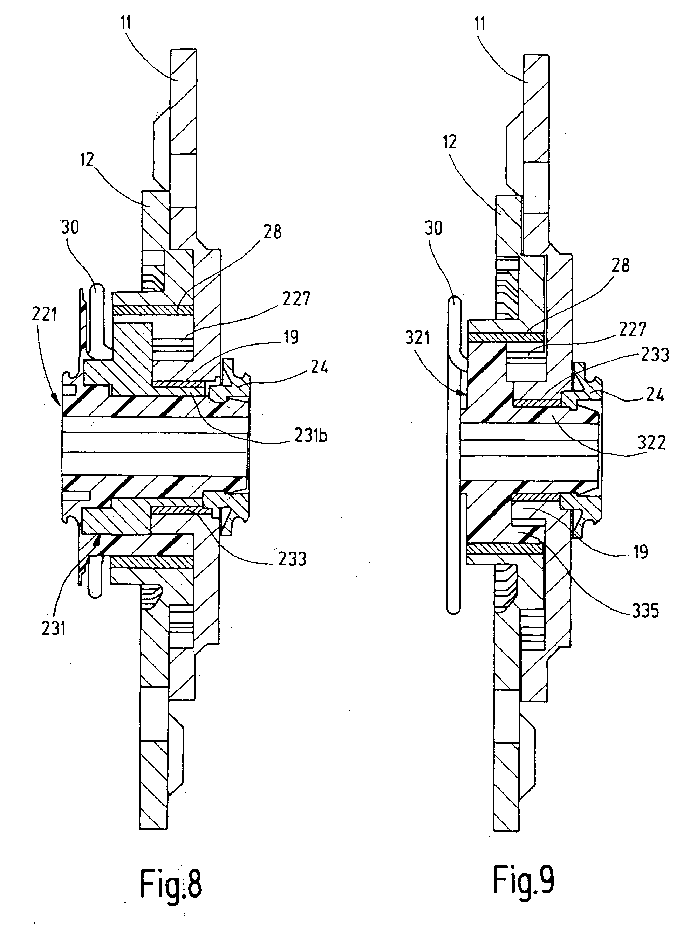

- Fig. 8: einen Axialschnitt durch das zweite Ausführungsbeispiel,
- Fig. 9: einen Axialschnitt durch das dritte Ausführungsbeispiel, und

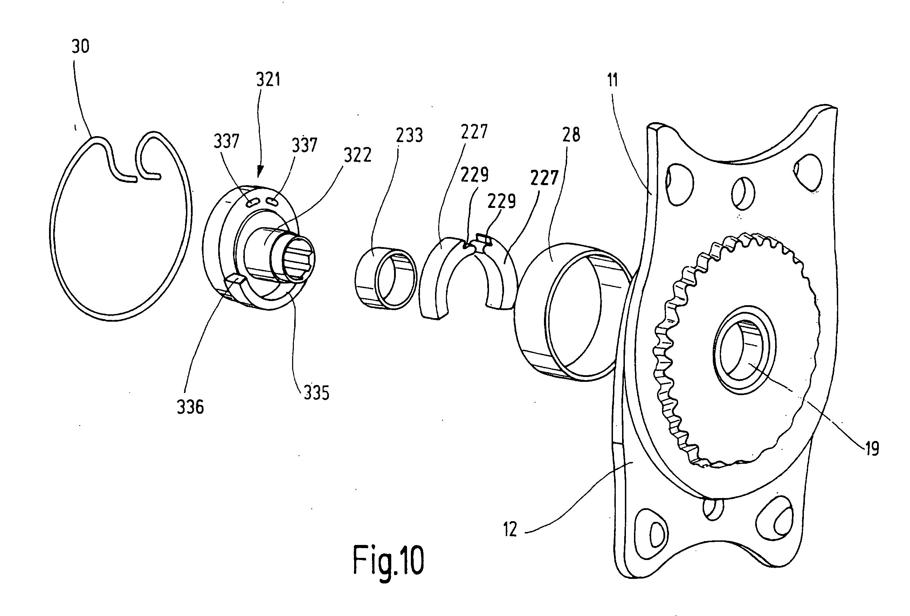

- Fig. 10: eine Explosionsdarstellung des dritten Ausführungsbeispiels.

Ein Fahrzeugsitz 1 für ein Kraftfahrzeug weist ein Sitzteil 3 und eine relativ zum Sitzteil 3 in ihrer Neigung manuell einstellbare Lehne 4 auf. Die Neigungseinstellung der Lehne 4 erfolgt mittels eines seitlich vorgesehenen Handrades und einer Antriebswelle, welche zwei Beschläge 10, die jeweils auf einer der beiden Seiten des Fahrzeugsitzes 1 angebracht sind und die Lehne 4 tragen, gemeinsam antreibt.

Jeder Beschlag 10 ist als Getriebebeschlag ausgebildet, bei welchem ein erstes Beschlagteil 11 und ein zweites Beschlagteil 12 über ein Getriebe zum Sperren und Einstellen miteinander verbunden sind. Die beiden Beschlagteile 11 und 12 weisen eine im wesentlichen flache Form auf und bestehen aus Stahl. Das erste Beschlagteil 11 ist vorliegend mit der Struktur der Lehne 4 verbunden (lehnenfest) und daher in der Zeichnung oben dargestellt. Entsprechend ist das zweite Beschlagteil 12 vorliegend sitzteilfest und in der Zeichnung unten dargestellt. Die Positionen der Beschlagteile 11 und 12 können auch ausgetauscht sein, so daß das Lagern und die Bewegungen der Bauteile relativ zueinander begrifflich immer im Relativsystem des Beschlags 10 zu sehen und nicht einschränkend zu verstehen sind.

Zur Ausbildung des Getriebes ist am zweiten Beschlagteil 12 ein Zahnrad 16 mit einer Außenverzahnung und am ersten Beschlagteil 11 ein Zahnkranz 17 mit einer Innenverzahnung ausgeprägt, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Der entsprechende Unterschied der Zähneanzahl von Zahnrad 16 und Zahnkranz 17 ermöglicht eine Abwälzbewegung des Zahnkranzes 17 am Zahnrad 16. Das erste Beschlagteil 11 weist auf der dem Zahnrad 16 zugewandten Seite konzentrisch zur Innenverzahnung des Zahnkranzes 17 einen angeformten Kragenzug 19 auf, auf dessen Zentrum sich nachfolgend verwendete Richtungsangabe in Zylinderkoordinaten beziehen.

Ein Mitnehmer, welcher im ersten Ausführungsbeispiel mit 21 bezeichnet ist, ist mittels einer zentralen Nabe 22 mit Spiel im Kragenzug 19 des ersten Beschlagteils 11 gelagert. Der Mitnehmer 21 besteht beispielsweise aus Kunststoff oder einem metallischen Werkstoff. Der Mitnehmer 21 ist mit einer zentralen, die Nabe 22 durchdringenden, zu einem Keilwellenprofil der Antriebswelle passend profilierten, axialen Aufnahme 23 versehen. An der von der Nabe 22 abgewandten Stirnseite des Mitnehmers 21 kann eine Abdeckscheibe von größerem Durchmesser am Mitnehmer 21 angeformt sein. Der Mitnehmer 21 wird auf der Außenseite des ersten Beschlagteils 11 durch einen aufgeclipsten Sicherungsring 24 axial gesichert. Zur Aufnahme der axial wirkenden Kräfte ist an den beiden Beschlagteilen 11 und 12 je ein Halteblech 25 angeschweißt, welches das jeweils andere Beschlagteil übergreift, ohne die Einstellbewegung zu behindern. Der Übersichtlichkeit halber ist in der Zeichnung nur eines dieser Haltebleche 25 dargestellt.

Zwei Keilsegmente 27, die vorzugsweise aus Stahl (insbesondere Sintermaterial) oder einem anderen metallischen Werkstoff hergestellt und axial zwischen dem Mitnehmer 21 und dem ersten Beschlagteil 11 angeordnet sind, definieren einen Sperrexzenter. Die Keilsegmente 27 sind mittels ihren kreisbogenförmig gekrümmten Innenseiten auf dem Kragenzug 19 abgestützt. Mit ihren ebenfalls kreisbogenförmig gekrümmten, zu den Innenseiten exzentrischen Außenseiten dienen die Keilsegmente 27 der Lagerung Wälz- oder Gleitlagerbuchse, welche im folgenden als erste Gleitlagerbuchse 28 bezeichnet ist. Die erste Gleitlagerbuchse 28 ist in das zweite Beschlagteil 12 drehfest eingepresst. Die Reibung zwischen der ersten Gleitlagerbuchse 28 und den Keilsegmenten 27 ist deutlich geringer als die Reibung zwischen den Keilsegmenten 27 und dem Kragenzug 19. Die einander zugekehrten Breitseiten der Keilsegmente 27 nehmen mit je einer Bohrung 29 (oder einem sich in Umfangsrichtung öffnenden Maul) jeweils einen abgewinkelten Endfinger einer vorgespannten Ringfeder 30 auf, welche auf die Keilsegmente 27 einwirkt und diese in Umfangsrichtung auseinanderdrückt, um den Beschlag 10 in der Ausgangsstellung zu sperren.

Axial neben den Keilsegmenten 27 ist ein Laufexzenter angeordnet, welcher im ersten Ausführungsbeispiel mit 31 bezeichnet ist. Der Laufexzenter 31 ist beispielsweise aus Kunststoff oder einem metallischen Werkstoff gefertigt. Der Laufexzenter 31 liegt radial außen mit seiner kreisbogenförmig gekrümmten Außenseite an der ersten Gleitlagerbuchse 28 an und dient ebenfalls deren Lagerung. Radial innen liegt der Laufexzenter 31 mit seiner ebenfalls kreisbogenförmig gekrümmte Innenseite, welche exzentrisch zur Außenseite angeordnet ist, an einer weiteren Wälz- oder Gleitlagerbuchse an, welche im folgenden als zweite Gleitlagerbuchse 33 bezeichnet ist. Die zweite Gleitlagerbuchse 33 ist drehfest in den Laufexzenter 31 eingebracht (und relativ zum Kragenzug 19 mit geringer Kraft drehbar) oder sitzt alternativ drehfest am Kragenzug 19 (wobei der Laufexzenter 31 relativ zur Gleichtlagerbuchse 33 drehbar ist). Die Reibung zwischen den Gleitlagerbuchse 28 und 33 einerseits und dem Laufexzenter 31 oder dem Kragenzug 19 andererseits ist ebenfalls deutlich geringer als die Reibung zwischen den Keilsegmenten 27 und dem Kragenzug 19.

In der gesperrten Ausgangsstellung drückt der Sperrexzenter in Verlängerung der Richtung seiner Exzentrizität das Zahnrad 16 an einer so definierten Eingriffsstelle in den Zahnkranz 17. Der Laufexzenter 31 richtet sich nach der Exzentrizität des Sperrexzenters aus, so daß zwei Exzenter nebeneinander angeordnet sind. Vorrangig, d.h. normalerweise alleine, übernimmt der Sperrexzenter die Lagerung der beiden Beschlagteile 11 und 12 aufeinander und die Spielfreistellung und damit die Sperrwirkung. Fallweise trägt auch der Laufexzenter 31 anteilig zur Lagerung bei. Bei einem Antrieb des Mitnehmers 21 erfolgt eine Annäherung der Keilsegmente 27 entgegen der Kraft der Ringfeder 30, wodurch die Sperrwirkung aufgehoben wird. Der Laufexzenter 31 übernimmt vorrangig, d.h. normalerweise alleine, die Lagerung der beiden Beschlagteile 11 und 12 (und damit den Antrieb der Abwälzbewegung). Insbesondere bei Einstellbewegungen in Lastrichtung treten fallweise Mischzustände auf, und eines oder beide Keilsegmente 27 können mit zu Lagerung und zum Antrieb beitragen. Der Laufexzenter 31 gleitet - während seiner Drehung um den Kragenzug 19 des ersten Beschlagteils 11 - am zweiten Beschlagteil 12 entlang unter Verlagerung der Richtung der Exzentrizität und damit unter Verlagerung der Eingriffsstelle des Zahnrades 16 im Zahnkranz 17, was sich als die taumelnde Abwälzbewegung darstellt.

Die bislang beschriebene Ausbildung von Mitnehmer 21, Sperrexzenter und Laufexzenter 31 ist für alle Ausführungsbeispiele und deren Abwandlungen gleich. Unterschiede bestehen in der weiteren, im folgenden beschriebenen Detailausbildung dieser und weiterer Bauteile.

Im ersten Ausführungsbeispiel ist am Mitnehmer 21 auf der Stirnseite mit der Nabe 22 ein Mitnehmersegment 35 angeformt, welches in Umfangsrichtung des Mitnehmers 21 durch je eine Mitnehmernase 36 begrenzt ist. Das Mitnehmersegment 35 fasst mit seinen Mitnehmernasen 36 mit Spiel zwischen die Schmalseiten der Keilsegmente 27. Der Laufexzenter 31 ist sichelförmig ausgebildet und axial zwischen dem Mitnehmer 21 und den Keilsegmenten 27 angeordnet. Zwei in Umfangsrichtung verlaufende und den Laufexzenter 31 axial durchdringende Schlitze 37 erlauben mit Spiel den Endfingern der Ringfeder 30 den ungehinderten Durchgriff in die Bohrungen 29 der Keilsegmente 27, ohne die Keilsegmente 27 mit dem Laufexzenter 31 zu koppeln.

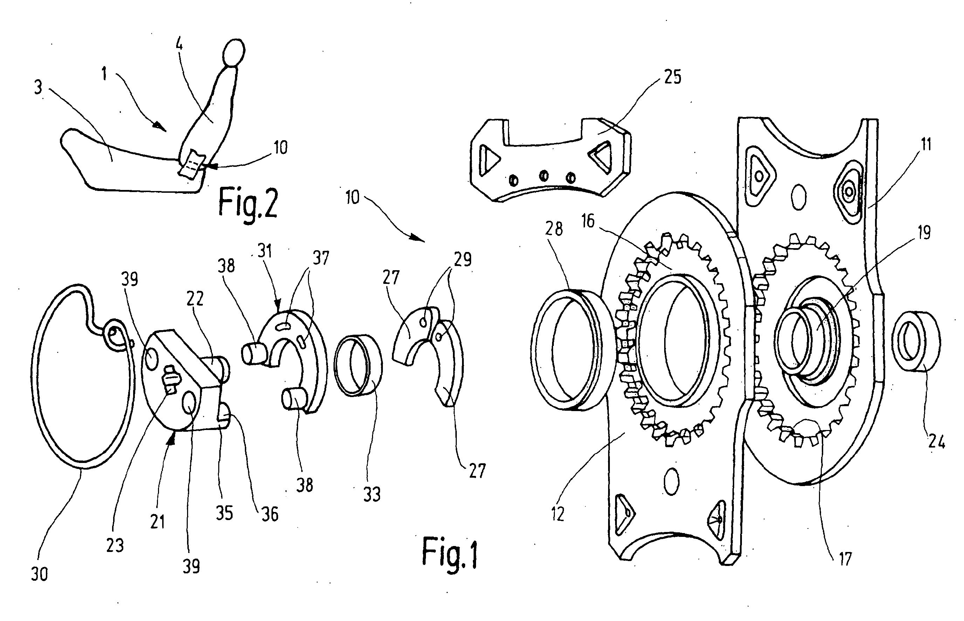

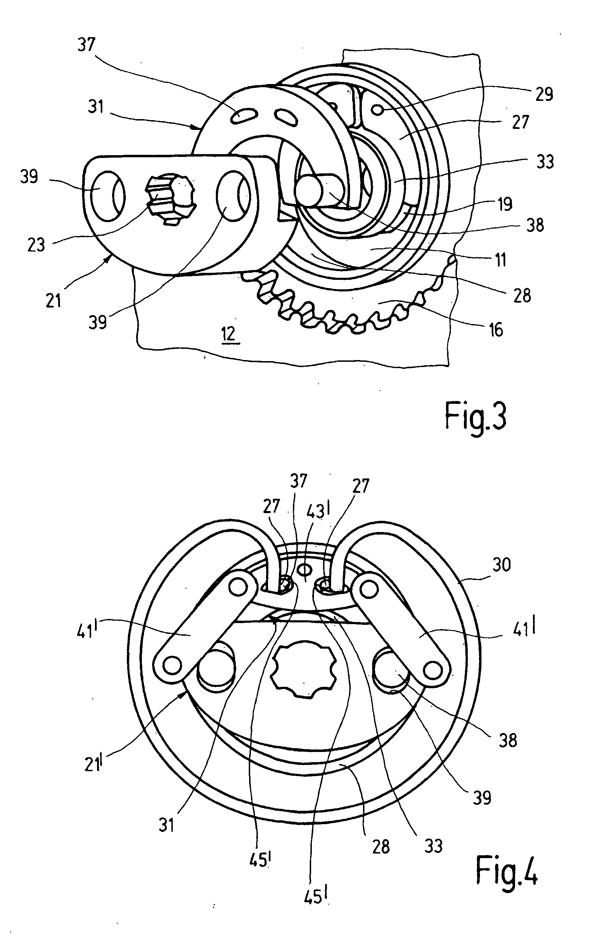

Am Laufexzenter 31 sind auf der dem Mitnehmer 21 zugewandten Stirnseite zwei axial abstehende Zapfen 38 angeformt, welche einander radial gegenüber liegen. Jeder Zapfen 38 greift in ein in Umfangsrichtung angeordnetes Langloch 39. In der Ausgangsstellung ist der Zapfen 38 ungefähr in der Mitte des Langlochs 39 angeordnet. Die Zapfen 38 und Langlöcher 39 sind dabei so angeordnet, daß bei einer Anlage eines Zapfens 38 an dem näher zum Mitnehmersegment 35 gelegenen Ende des zugehörigen Langlochs 39 (in den Fig. 1 und 3 dem unteren Ende) der Laufexzenter 31 von der Mitnehmernase 36 noch beabstandet ist.

Im Falle des Antriebs wird ein Drehmoment zunächst in den Mitnehmer 21 eingeleitet und dann auf den Sperrexzenter übertragen, indem eine der Mitnehmernasen 36 das zugeordnete Keilsegment 27 beaufschlagt und die Keilsegmente 27 zusammendrückt. Wenn mit der weiteren Drehung des Mitnehmers 21 der durch die Langlöcher 39 vorgegebene Leerweg durchfahren ist, wird der Laufexzenter 31 an den Zapfen 38 beaufschlagt und mitgenommen.

Da zwei radial einander gegenüberliegende Systeme von Zapfen 38 und Langlöchern 39 vorgesehen sind, erfolgt die Beaufschlagung und Mitnahme des Laufexzenters 31 durch den Mitnehmer 21 ohne Querkräfte, d.h. das Drehmoment greift (punkt-)symmetrisch zur zentral angeordneten Drehachse des Mitnehmers 21 an. Der Laufexzenter 31 gleitet dann mit weitgehend gleicher (geringer) Reibung an den Gleitlagerbuchsen 28 und 33 ab. Mit Querkräften, d.h. einem unsymmetrisch angreifenden Drehmoment, würde ein Verkippen des Laufexzenters 31 um eine momentane Drehachse (an der Kontaktstelle zwischen Mitnehmer 21 und Laufexzenter 31) erfolgen, was eine geringfügige lokale Erhöhung der Normalkraft vom Laufexzenter 31 auf die Gleitlagerbuchsen 28 und 33 und damit eine geringfügig erhöhte Reibung zur Folge hätte.

Zum beschriebenen, querkraftfreien, ersten Ausführungsbeispiel sind Abwandlungen möglich, welche sich in der Ansteuerung der Keilsegmente 27 oder der Lagerung unterscheiden. Diese Ansteuerung erfolgt unter Verwendung der Ringfeder 30, so daß das Mitnehmersegment 35 entfällt.

In einer ersten Abwandlung zum ersten Ausführungsbeispiel, welche dem ersten Ausführungsbeispiel gleicht, soweit nicht abweichend beschrieben, sind gleiche Bauteile mit gleichen Bezugszeichen und gleichwirkende Bauteile mit Bezugszeichen mit einem Apostroph versehen.

Am Mitnehmer 21' sind symmetrisch zwei Koppeln 41' angelenkt, welche wiederum symmetrisch an einer Kulissenschwinge 43' angelenkt sind. Die Kulissenschwinge 43' ist drehbar im Laufexzenter 31 gelagert, welcher beispielsweise als vollständiger Ring ausgebildet sein kann. Zwei Kulissen 45' in der Kulissenschwinge 43' ermöglichen den Endfingern der Ringfeder 30 den Durchgriff durch die Schlitze 37 des Laufexzenters 31 in die Bohrungen 29 der Keilsegmente 27.

Wird der Mitnehmer 21' angetrieben, schwenkt er mittels der Koppeln 41' die Kulissenschwinge 43'. Durch die Form der Kulissen 45' bedingt bewegen sich die Endfinger der Ringfeder 30 aufeinander zu, bis die Keilsegmente 27 aneinander anliegen, so daß die Sperrwirkung aufgehoben ist. Der Laufexzenter 31 dreht sich aufgrund der doppelt vorhandenen Zapfen 38 und Langlöcher 39 querkraftfrei.

Eine zweite Abwandlung zum ersten Ausführungsbeispiel gleicht der ersten Abwandlung und dem ersten Ausführungsbeispiel, soweit nicht abweichend beschrieben, weshalb gleiche Bauteile mit gleichen Bezugszeichen und gleichwirkende Bauteile mit Bezugszeichen mit zwei Apostrophen versehen sind.

Der Mitnehmer 21" und die drehbar im Laufexzenter 31 gelagerte Kulissenschwinge 43" mit den Kulissen 45" sind mittels einer Evolventenverzahnung 47" gekoppelt. Wird der Mitnehmer 21" angetrieben, schwenkt er mittels der Evolventenverzahnung 47" die Kulissenschwinge 43". Durch die Form der Kulissen 45" bedingt bewegen sich die Endfinger der Ringfeder 30 aufeinander zu, bis die Keilsegmente 27 aneinander anliegen, so daß die Sperrwirkung aufgehoben ist. Der Laufexzenter 31 dreht sich wiederum querkraftfrei.

Eine dritte Abwandlung zum ersten Ausführungsbeispiel gleicht den vorherigen Abwandlungen und dem ersten Ausführungsbeispiel, soweit nicht abweichend beschrieben, weshalb gleiche Bauteile mit gleichen Bezugszeichen und gleichwirkende Bauteile mit Bezugszeichen mit drei Apostrophen versehen sind.

Aufgrund des Belastung der Lehne 4 in Lastrichtung ist eines der beiden Keilsegmente 27 niedriger und eines höher belastet. Der Mitnehmer 21"' ist an einer Kopplungsstelle 48"' mit einer Koppel 41"' gekoppelt, welche an einer Kulissenschwinge 43"' drehbar gelagert ist. Die Kulissenschwinge 43"' ist etwas unsymmetrisch ausgebildet und weist nur eine Kulisse 45"' auf, und zwar auf der Seite des niedriger belasteten Keilsegments 27, während auf der anderen Seite die Kulissenschwinge 43"' mittels des zugeordneten (in der Zeichnung linken) Endfingers der Ringfeder 30 im höher belasteten Keilsegment 27 gelagert ist.

Wird der Mitnehmer 21"' angetrieben, schwenkt er mittels der Evolventenverzahnung 47"' und der Koppel 41"' die Kulissenschwinge 43"'. Durch die Form der einzigen Kulisse 45"' bedingt zieht der zugeordnete (in der Zeichnung rechte) Endfinger der Ringfeder 30 das niedriger belastete Keilsegment 27 in Anlage an das höher belastete Keilsegment 27, so daß die Sperrwirkung aufgehoben ist. Der Laufexzenter 31 dreht sich wiederum querkraftfrei.

Ein zweites Ausführungsbeispiel gleicht dem ersten Ausführungsbeispiel, weshalb gleiche Bauteile gleiche Bezugszeichen und gleichwirkende Bauteile um 200 höhere Bezugszeichen tragen. Am Mitnehmer 221 ist auf der Stirnseite mit der Nabe 222 ein Mitnehmersegment 235 angeformt, welches in Umfangsrichtung des Mitnehmers 221 durch je eine Mitnehmernase 236 begrenzt ist. Das Mitnehmersegment 235 fasst mit seinen Mitnehmernasen 236 mit Spiel zwischen die Schmalseiten der Keilsegmente 227. Die Keilsegmente 227 sitzen direkt auf dem Kragenzug 19 des ersten Beschlagteils, während die erste Gleitlagerbuchse 28 wiederum in das zweite Beschlagteil 12 gepresst ist.

Der Laufexzenter 231 ist ringförmig ausgebildet und axial zwischen dem Mitnehmer 221 und den Keilsegmenten 227 angeordnet. Zwei in Umfangsrichtung verlaufende und den Laufexzenter 231 axial durchdringende Schlitze 237 erlauben mit Spiel den Endfingern der Ringfeder 30 den ungehinderten Durchgriff in die anstelle der Bohrungen vorgesehenen, sich öffnenden Mäuler 229 der Keilsegmente 227, ohne die Keilsegmente 227 mit dem Laufexzenter 231 zu koppeln. Am Laufexzenter 231 sind auf der dem Mitnehmer 221 zugewandten Stirnseite zwei axial abstehende Zapfen 238 angeformt, welche einander radial gegenüber liegen. Jeder Zapfen 238 greift formschlüssig in ein in Umfangsrichtung angeordnetes Loch 239. Damit sind Mitnehmer 221 und der Laufexzenter 231 drehfest miteinander verbunden, d.h. auf drehfeste Mitnahme gekoppelt.

Die zweite Gleitlagerbuchse 233 ist auf einen nabenartigen, axialen Vorsprung 231 b des Laufexzenters 231 gepresst und innerhalb des Kragenzuges 19 angeordnet, d.h. im Kragenzug 19 gelagert. Die Nabe 222 des Mitnehmers 221 wiederum ist innerhalb des Laufexzenters 231 angeordnet ist, d.h. der Mitnehmer 221 ist unter Zwischenlage des Laufexzenters 231 samt zweiter Gleitlagerbuchse 233 am ersten Beschlagteil 11 gelagert.

Im Falle des Antriebs wird ein Drehmoment zunächst in den Mitnehmer 221 eingeleitet und dann auf den Sperrexzenter übertragen, indem eine der Mitnehmernasen 236 das zugeordnete Keilsegment 227 beaufschlagt und die Keilsegmente 227 zusammendrückt. Mittels der Löcher 239 und Zapfen 238 wird der Laufexzenter 231 beaufschlagt, und zwar aufgrund der Symmetrie querkraftfrei, und mitgenommen. Der Laufexzenter 231 gleitet dann mit weitgehend gleicher (geringer) Reibung an den Gleitlagerbuchsen 28 und 233 ab, woraus sich die Abwälzbewegung der Beschlagteile 11 und 12 relativ zueinander ergibt.

Ein drittes Ausführungsbeispiel gleicht dem ersten und zweiten Ausführungsbeispiel, soweit nicht abweichend beschrieben, weshalb gleiche Bauteile gleiche Bezugszeichen und gleichwirkende Bauteile um 300 bzw. 100 höhere Bezugszeichen tragen. Der Mitnehmer 321 des dritten Ausführungsbeispiels ist zugleich als Laufexzenter ausgebildet und übernimmt dessen Aufgaben, d.h. Mitnehmer und Laufexzenter sind einstückig ausgebildet bzw. lediglich verschiedene Bereiche des gleichen Bauteils. Am Mitnehmer 321 ist auf der Stirnseite mit der Nabe 322 ein Mitnehmersegment 335 angeformt, welches in Umfangsrichtung des Mitnehmers 321 durch je eine Mitnehmernase 336 begrenzt ist. Das Mitnehmersegment 335 fasst mit seinen Mitnehmernasen 336 mit Spiel zwischen die Schmalseiten der Keilsegmente 227.

Die Keilsegmente 227 sitzen direkt auf dem Kragenzug 19 des ersten Beschlagteils, während die erste Gleitlagerbuchse 28 wiederum in das zweite Beschlagteil 12 gepresst ist. Die zweite Gleitlagerbuchse 233 ist auf die Nabe 322 des Mitnehmers 321 gepresst und innerhalb des Kragenzuges 19 angeordnet, d.h. im Kragenzug 19 gelagert. Zwei in Umfangsrichtung verlaufende und den Mitnehmer 321 axial durchdringende Schlitze 337 erlauben mit Spiel den Endfingern der Ringfeder 30 den ungehinderten Durchgriff in die anstelle der Bohrungen vorgesehenen, sich öffnenden Mäuler 229 der Keilsegmente 227, ohne an dieser Stelle die Keilsegmente 227 mit dem Mitnehmer 321 zu koppeln. In abgewandelter Ausführung könnte genau dieses erwünscht sein, d.h. die Schlitze 337 zu Kulissen für die Endfinger der Ringfeder 30 weitergebildet sein, Bohrungen in den Keilsegmenten vorgesehen sein und das Mitnehmersegment entfallen.

Im Falle des Antriebs wird ein Drehmoment in den Mitnehmer 321 eingeleitet und dann auf den Sperrexzenter übertragen, indem eine der Mitnehmernasen 336 das zugeordnete Keilsegment 227 beaufschlagt und die Keilsegmente 227 zusammendrückt. Aufgrund der einstückigen Ausbildung dreht sich der Mitnehmer 321 querkraftfrei. Er gleitet mit weitgehend gleicher (geringer) Reibung an den Gleitlagerbuchsen 28 und 233 ab, woraus sich die Abwälzbewegung der Beschlagteile 11 und 12 relativ zueinander ergibt.

### Bezugszeichenliste

- 1 Fahrzeugsitz 3 Sitzteil: 4
- Lehne: 10 Beschlag
- 11: erstes Beschlagteil
- 12: zweites Beschlagteil
- 16: Zahnrad
- 17: Zahnkranz
- 19: Kragenzug
- 21, 21', 21", 21"', 221, 321: Mitnehmer
- 22, 222, 322: Nabe
- 23: Aufnahme
- 24: Sicherungsring
- 25: Halteblech
- 27,227: Keilsegment
- 28: erste Gleitlagerbuchse
- 29: Bohrung
- 30: Ringfeder
- 31, 131, 231: Laufexzenter
- 33, 233: zweite Gleitlagerbuchse
- 35, 235, 335: Mitnehmersegment
- 36, 236, 336: Mitnehmernase
- 37, 237, 337: Schlitz
- 38,238: Zapfen
- 39: Langloch
- 41', 41 "': Koppel
- 43', 43", 43"': Kulissenschwinge
- 45', 45", 45"': Kulisse
- 47": Evolventenverzahnung
- 48"': Kopplungsstelle
- 229: Maul
- 231 b: Vorsprung
- 239: Loch

## Patentansprüche

1. Beschlag für einen Fahrzeugsitz, insbesondere für einen Kraftfahrzeugsitz, mit einem ersten Beschlagteil (11), einem mit dem ersten Beschlagteil (11) in Getriebeverbindung stehenden zweiten Beschlagteil (12), einem Sperrexzenter, welcher vorrangig zum Sperren des Beschlags (10) vorgesehen ist, einem Laufexzenter (31; 231), welcher vorrangig zum Antrieb einer relativen Abwälzbewegung des zweiten Beschlagteils (12) am ersten Beschlagteil (11) zum Einstellen des Beschlags (10) vorgesehen ist, und einem Mitnehmer (21; 21'; 21"; 21"'; 221; 321), welcher zu Beginn der Einstellbewegung den Sperrexzenter zum Aufheben der Sperrwirkung ansteuert und sich während der Einstellbewegung dreht, wodurch wenigstens der Laufexzenter (31; 231) angetrieben wird, **dadurch gekennzeichnet, dass** der sich drehende Mitnehmer (21; 21'; 21"; 21"'; 221; 321) den drehbaren Laufexzenter (31; 231) querkraftfrei beaufschlagt, indem der Mitnehmer (21; 21'; 21"; 21"'; 221) den Laufexzenter (31; 231) an wenigstens zwei über den Umfang gleichmäßig verteilten Stellen beaufschlagt, welche den gleichen Abstand zur gemeinsamen Drehachse des Mitnehmers (21; 21'; 21"; 21"'; 221) und des Laufexzenters (31; 231) aufweisen.

2. Beschlag nach Anspruch 1, **dadurch gekennzeichnet, dass** der Mitnehmer (221) und der Laufexzenter (231) drehfest miteinander verbunden sind.

3. Beschlag nach einem der vorhergehenden Ansprüche, **dadurch gekennzeichnet, dass** der Mitnehmer (21; 21'; 21"; 21"'; 221) den Laufexzenter (31; 231) mittels zweier Zapfen (38) und zweier Löcher (239) oder Langlöcher (39) beaufschlagt, welche punktsymmetrisch zueinander bezüglich der Drehachse des Mitnehmers (21; 21'; 21"; 21"'; 221) angeordnet sind.

4. Beschlag für einen Fahrzeugsitz, insbesondere für einen Kraftfahrzeugsitz, mit einem ersten Beschlagteil (11), einem mit dem ersten Beschlagteil (11) in Getriebeverbindung stehenden zweiten Beschlagteil (12), einem Sperrexzenter, welcher vorrangig zum Sperren des Beschlags (10) vorgesehen ist, einem Laufexzenter (31; 231), welcher vorrangig zum Antrieb einer relativen Abwälzbewegung des zweiten Beschlagteils (12) am ersten Beschlagteil (11) zum Einstellen des Beschlags (10) vorgesehen ist, und einem Mitnehmer (21; 21'; 21"; 21"'; 221; 321), welcher zu Beginn der Einstellbewegung den Sperrexzenter zum Aufheben der Sperrwirkung ansteuert und sich während der Einstellbewegung dreht, wodurch wenigstens der Laufexzenter (31; 231) angetrieben wird, nach Anspruch 1 oder 2, **dadurch gekennzeichnet, dass** der Mitnehmer (321) zugleich als Laufexzenter (31; 231) ausgebildet ist.

5. Beschlag nach einem der vorhergehenden Ansprüche, **dadurch gekennzeichnet, dass** der Laufexzenter (31; 231) sowohl gegenüber dem ersten Beschlagteil (11) als auch gegenüber dem zweiten Beschlagteil (12) mittels je einer Wälz-oder Gleitlagerbuchse (28, 33; 233) gelagert ist, wobei die Reibung zwischen dem Laufexzenter (31; 231) und den Wälz- oder Gleitlagerbuchsen (28, 33; 233) oder zwischen wenigstens einer Wälz- oder Gleitlagerbuchse (28, 33; 233) und dem zugeordneten Beschlagteil (11, 12) kleiner ist als die Reibung zwischen dem Sperrexzenter und wenigstens einem der Beschlagteile (11, 12).

6. Beschlag nach Anspruch 5, **dadurch gekennzeichnet, dass** der drehbare Laufexzenter (31; 231) bezüglich seiner Drehachse radial außen an einer ersten Gleitlagerbuchse (28) und radial weiter innen an einer zweiten Gleitlagerbuchse (33; 233) anliegt.

7. Beschlag nach Anspruch 5 oder 6, **dadurch gekennzeichnet, dass** jede der beiden Gleitlagerbuchsen (28, 33; 233) drehfest mit dem ihr zugeordneten Beschlagteil (12, 11) oder mit dem Laufexzenter (31; 131; 231) verbunden ist.

8. Beschlag nach einem der vorhergehenden Ansprüche, **dadurch gekennzeichnet, dass** der Laufexzenter (31; 231) ringförmig oder sichelförmig ausgebildet ist.

9. Beschlag nach einem der vorhergehenden Ansprüche, **dadurch gekennzeichnet, dass** der Mitnehmer (21; 21'; 21"; 21"'; 221; 321) den aus zwei Keilsegmenten (27; 227) bestehenden Sperrexzenter mittels eines Mitnehmersegments (35; 235; 335) oder mittels einer Ringfeder (30) ansteuert, welches bzw. welche jeweils auf die Keilsegmente (27; 227) einwirkt und diese einander annähert, insbesondere in Anlage aneinander bringt.

10. Beschlag nach Anspruch 9, **dadurch gekennzeichnet, dass** der Mitnehmer (21; 21'; 21"; 21"') an eine schwenkbare Kulissenschwinge (43'; 43"; 43"') gekoppelt ist, welche wenigstens einen, in eines der Keilsegmente (27) greifenden Endfinger der Ringfeder (30) bewegt.

11. Beschlag nach Anspruch 10, **dadurch gekennzeichnet, dass** der Mitnehmer (21; 21'; 21"; 21"") mittels Koppeln (41'; 41"') und/oder einer Evolventenverzahnung (47") und/oder einer Kopplungsstelle (48"') an die Kulissenschwinge (43'; 43"; 43"') gekoppelt ist.

12. Beschlag nach Anspruch 10 oder 11, **dadurch gekennzeichnet, dass** die Kulissenschwinge (43'; 43"; 43"') am Laufexzenter (31) oder an einem der Eendfinger der Ringfeder (30) gelagert ist.

13. Beschlag nach einem der Ansprüche 10 bis 12, **dadurch gekennzeichnet, dass** der Laufexzenter (31; 231) axial zwischen dem Mitnehmer (21; 21'; 21"; 21"'; 221) und dem Sperrexzenter angeordnet ist, wobei den Laufexzenter (31; 231) durchdringende Schlitze (37; 237) den Endfingern der Ringfeder (30) einen ungehinderten Durchgriff zu den Keilsegmenten (27) erlauben.

14. Beschlag nach einem der vorhergehenden Ansprüche, **dadurch gekennzeichnet, dass** der Laufexzenter (31; 231) unter Zwischenlage einer Gleitlagerbuchse (33; 233) an oder in einem Kragenzug (19) des ersten Beschlagteils (11) gelagert ist.

15. Fahrzeugsitz, insbesondere Kraftfahrzeugsitz, mit einem Sitzteil (3) und einer Lehne (4), **gekennzeichnet durch** je einen Beschlag (10) nach einem der vorhergehenden Ansprüche zur Einstellung der Neigung der Lehne (4) relativ zum Sitzteil.

## Claims

1. A fitting for a vehicle seat, in particular for a motor vehicle seat, with a first fitting part (11), a second fitting part (12) in geared connection with the first fitting part (11), a locking eccentric, which is provided primarily for locking the fitting (10), a running eccentric (31; 231), which is provided primarily for driving a relative rolling movement of the second fitting part (12) on the first fitting part (11) for adjusting the fitting (10), and a driver (21; 21'; 21"; 21"'; 221; 321) which, at the start of the adjusting movement, controls the locking eccentric for canceling the locking effect and, during the adjusting movement, rotates, thus driving at least the running eccentric (31; 231), **characterized in that** the rotating driver (21; 21'; 21"; 21"'; 221; 321) impinges on the rotatable running eccentric (31; 231) without lateral force, wherein the driver (21; 21'; 21"; 21"'; 221) impinges on the running eccentric (31; 231) at at least two points distributed uniformly over the periphery, which are at the same distance from the common axis of rotation of the driver (21; 21'; 21"; 21"'; 221) and
of the running eccentric (31; 231).

2. The fitting as claimed in claim 1, **characterized in that** the driver (221) and the running eccentric (231) are connected to one another fixedly in terms of rotation.

3. The fitting as claimed in one of the preceding claims, **characterized in that** the driver (21; 21'; 21"; 21"'; 221) impinges on the running eccentric (31; 231) by means of two pins (38) and two holes (239) or elongated holes (39), which are arranged point symmetrically to one another relative to the axis of rotation of the driver (21; 21'; 21"; 21"'; 221).

4. The fitting for a vehicle seat, in particular for a motor vehicle seat, with a first fitting part (11), a second fitting part (12) in geared connection with the first fitting part (11), a locking eccentric, which is provided primarily for locking the fitting (10), a running eccentric (31; 231) which is primarily provided for driving a relative rolling movement of the second fitting part (12) on the first fitting part (11) for adjusting the fitting (10), and a driver (21; 21'; 21"; 21"'; 221) which, at the start of the adjusting movement, controls the locking eccentric for canceling the locking effect and, during the adjusting movement, rotates, thus driving at least the running eccentric (31; 12), as claimed in claim 1 or 2, **characterized in that** the driver (321) is configured at the same time as a running eccentric (31; 231).

5. The fitting as claimed in one of the preceding claims, **characterized in that** the running eccentric (31; 231) is mounted by means of one respective rolling-contact bearing bush or plain bearing bush (28, 33; 233), both relative to the first fitting part (11) and also relative to the second fitting part (12), the friction between the running eccentric (31; 231) and the rolling-contact bearing bush or plain bearing bush (28, 33; 233) or between at least one rolling-contact bearing bush or plain bearing bush (28, 33; 233) and the associated fitting part (11, 12) being less than the friction between the locking eccentric and at least one of the fitting parts (11, 12).

6. The fitting as claimed in claim 5, **characterized in that** the rotatable running eccentric (31; 231) bears radially outward against a first plain bearing bush (28) relative to the axis of rotation thereof and radially further inward against a second plain bearing bush (33; 233).

7. The fitting as claimed in claim 5 or 6, **characterized in that** each of the two plain bearing bushes (28, 33; 233) is connected fixedly in terms of rotation to the fitting part (12, 11) associated therewith or to the running eccentric (31; 131; 231).

8. The fitting as claimed in one of the preceding claims, **characterized in that** the running eccentric (31; 231) is of annular or sickle-shaped configuration.

9. The fitting as claimed in one of the preceding claims, **characterized in that** the driver (21; 21'; 21"; 21"'; 221; 321) controls the locking eccentric consisting of two wedge segments (27; 227) by means of a driving segment (35; 235; 335) or by means of an annular spring (30), which respectively acts on the wedge segments (27; 227) and brings said wedge segments close to one another, in particular to bear against one another.

10. The fitting as claimed in claim 9, **characterized in that** the driver (21; 21'; 21"; 21"') is coupled to a pivotable connecting link (43'; 43"; 43"') which moves at least one end finger of the annular spring (30) engaging in one of the wedge segments (27).

11. The fitting as claimed in claim 10, **characterized in that** the driver (21; 21'; 21"; 21"') is coupled to the connecting link (43', 43"; 43"') by means of links (41'; 41"') and/or an involute toothing (47") and/or a coupling point (48"').

12. The fitting as claimed in claim 10 or 11, **characterized in that** the connecting link (43'; 43"; 43"') is mounted on the running eccentric (31) or on one of the end fingers of the annular spring (30).

13. The fitting as claimed in one of claims 10 to 12, **characterized in that** the running eccentric (31; 231) is arranged axially between the driver (21; 21'; 21"; 21"'; 221) and the locking eccentric, slots (37; 237) penetrating the running eccentric (31; 231) allowing the end fingers of the annular spring (30) an unhindered penetration of the wedge segments (27).

14. The fitting as claimed in one of the preceding claims, **characterized in that** the running eccentric (31; 231) is mounted by the interposition of a plain bearing bush (33; 233) on or in a collar (19) of the first fitting part (11).

15. XX. The vehicle seat, in particular motor vehicle seat, having a seat part (3) and a backrest (4) **characterized by** one respective fitting (10) as claimed in one of the preceding claims for adjusting the inclination of the backrest (4) relative to the seat part.

## Revendications

1. - Ferrure pour un siège de véhicule, en particulier pour un siège de véhicule automobile, comprenant une première partie de ferrure (11), une deuxième partie de ferrure (12) en liaison par engrenage avec la première partie de ferrure (11), un excentrique de blocage, qui est prévu en priorité pour le blocage de la ferrure (10), un excentrique de marche (31 ; 231), qui est prévu en priorité pour l'entraînement d'un mouvement de roulement relatif de la deuxième partie de ferrure (12) sur la première partie de ferrure (11) pour le réglage de la ferrure (10), et un entraîneur (21 ; 21'; 21"; 21"'; 221; 321), qui active au début du mouvement de réglage l'excentrique de blocage pour la suppression de l'effet de blocage et tourne pendant le mouvement de réglage, ce par quoi au moins l'excentrique de marche (31 ; 231) est entraîné, **caractérisée par le fait que** l'entraîneur (21 ; 21' ; 21"; 21"'; 221, 321) qui tourne sollicite sans force transversale l'excentrique de marche (31 ; 231) rotatif du fait que l'entraîneur (21 ; 21' ; 21"; 21"'; 221) sollicite l'excentrique de marche (31 ; 231) en au moins deux endroits répartis uniformément sur le pourtour, lesquels présentent la même distance à l'axe de rotation commun de l'entraîneur (21 ; 21'; 21"; 21"'; 221) et de l'excentrique de marche (31 ; 231).

2. - Ferrure selon la revendication 1, **caractérisée par le fait que** l'entraîneur (221) et l'excentrique de marche (231) sont reliés l'un à l'autre de façon solidaire en rotation.

3. - Ferrure selon l'une quelconque des revendications précédentes, **caractérisée par le fait que** l'entraîneur (21 ; 21'; 21"; 21"'; 221) sollicite l'excentrique de marche (31 ; 231) au moyen de deux tenons (38) et de deux trous (239) ou trous oblongs (39), lesquels sont disposés réciproquement avec une symétrie ponctuelle par rapport à l'axe de rotation de l'entraîneur (21 ; 21'; 21"; 21"'; 221) .

4. - Ferrure pour un siège de véhicule, en particulier pour un siège de véhicule automobile, comprenant une première partie de ferrure (11), une deuxième partie de ferrure (12) en liaison par engrenage avec la première partie de ferrure (11), un excentrique de blocage, qui est prévu en priorité pour le blocage de la ferrure (10), un excentrique de marche (31 ; 231), qui est prévu en priorité pour l'entraînement d'un mouvement de roulement relatif de la deuxième partie de ferrure (12) sur la première partie de ferrure (11) pour le réglage de la ferrure (10), et un entraîneur (21 ; 21'; 21"; 21"'; 221; 321), qui active au début du mouvement de réglage l'excentrique de blocage pour la suppression de l'effet de blocage et tourne pendant le mouvement de réglage, ce par quoi au moins l'excentrique de marche (31 ; 231) est entraîné, selon l'une des revendications 1 ou 2, **caractérisée par le fait que** l'entraîneur (321) est conçu en même temps comme excentrique de marche (31 ; 231).

5. - Ferrure selon l'une quelconque des revendications précédentes, **caractérisée par le fait que** l'excentrique de marche (31, 231) est fixé sur paliers aussi bien par rapport à la première partie de ferrure (11) que par rapport à la deuxième partie de ferrure (12) au moyen de respectivement un coussinet à roulement ou un coussinet lisse (28, 33 ; 233), le frottement entre l'excentrique de marche (31 ; 231) et les coussinets à roulement ou coussinets lisses (28, 33 ; 233) ou entre au moins un coussinet à roulement ou coussinet lisse (28, 33 ; 233) et la partie de ferrure (11, 12) associée étant inférieur au frottement entre l'excentrique de blocage et au moins l'une des parties de ferrure (11, 12).

6. - Ferrure selon la revendication 5, **caractérisée par le fait que** l'excentrique de marche (31 ; 231) rotatif s'appuie par rapport à son axe de rotation radialement à l'extérieur sur un premier coussinet lisse (28) et radialement un peu plus loin à l'intérieur sur un deuxième coussinet lisse (33 ; 233).

7. - Ferrure selon l'une des revendications 5 ou 6, **caractérisée par le fait que** chacun des deux coussinets lisses (28, 33 ; 233) est relié de façon solidaire en rotation à la partie de ferrure (12, 11) qui lui est associée ou à l'excentrique de marche (31 ; 131 ; 231).

8. - Ferrure selon l'une quelconque des revendications précédentes, **caractérisée par le fait que** l'excentrique de marche (31 ; 231) est conçu en forme de bague ou de croissant.

9. - Ferrure selon l'une quelconque des revendications précédentes, **caractérisée par le fait que** l'entraîneur (21 ; 21' ; 21" ; 21"'; 221; 321) active l'excentrique de blocage constitué de deux segments à clavette (27 ; 227) au moyen d'un segment d'entraîneur (35 ; 235 ; 335) ou au moyen d'un ressort-bague (30), qui agit à chaque fois sur les segments à clavette (27 ; 227) et rapproche ces segments l'un de l'autre, en particulier les amène en appui l'un sur l'autre.

10. - Ferrure selon la revendication 9, **caractérisée par le fait que** l'entraîneur (21 ; 21' ; 21" ; 21"') est couplé à une barre à coulisse (43' ; 43"' ; 43"') basculante, qui déplace au moins un doigt d'extrémité, s'engageant dans l'un des segments à clavette (27), du ressort-bague (30).

11. - Ferrure selon la revendication 10, **caractérisée par le fait que** l'entraîneur (21 ; 21' ; 21"' ; 21"') est couplé par accouplement (41' ; 41"') et/ ou une denture à développante (47") et/ou un point d'accouplement (48"') à la barre à coulisse (43' ; 43" ; 43"').

12. - Ferrure selon l'une des revendications 10 ou 11, **caractérisée par le fait que** la barre à coulisse (43' ; 43"' ; 43"') est fixée sur l'excentrique de marche (31) ou sur l'un des doigts d'extrémité du ressort-bague (30).

13. - Ferrure selon l'une quelconque des revendications 10 à 12, **caractérisée par le fait que** l'excentrique de marche (31 ; 231) est disposé axialement entre l'entraîneur (21 ; 21' ; 21" ; 21"' ; 221) et l'excentrique de blocage, des fentes (37 ; 237) pénétrant l'excentrique de marche (31 ; 231) permettant aux doigts d'extrémité du ressort-bague (30) une pénétration libre sur les segments à clavette (27).

14. - Ferrure selon l'une quelconque des revendications précédentes, **caractérisée par le fait que** l'excentrique de marche (31 ; 231) est monté avec l'intercalation d'un coussinet lisse (33 ; 233) sur ou dans un emboutissage de collerette (19) de la première partie de ferrure (11).

15. - Siège de véhicule, en particulier siège de véhicule automobile, comprenant une assise (3) et un dossier (4), **caractérisé par** respectivement une ferrure (10) telle que définie à l'une quelconque des revendications précédentes pour le réglage de l'inclinaison du dossier (4) par rapport à l'assise.
